# EUROPÄISCHE PATENTSCHRIFT

(11) **EP 3 504 954 B1**
(45) Veröffentlichungstag und Bekanntmachung des Hinweises auf die Patenterteilung: **04.08.2021**
(21) Anmeldenummer: 18207184.5
(22) Anmeldetag: 20.11.2018
(51) Int. Cl.: A01D 34/68, A01D 34/78, F16D 55/02, F16D 59/00, H02K 7/102

(54) **BREMSVORRICHTUNG**
BRAKING DEVICE
DISPOSITIF DE FREINAGE

(30) Priorität: 27.12.2017 DE 102017223798
(43) Veröffentlichungstag der Anmeldung: 03.07.2019
(73) Patentinhaber: Robert Bosch GmbH, 70442 Stuttgart (DE)
(72) Erfinder: Bissell, John, Claydon, Suffolk IP6 0AN (GB); Coussins, Adrian, Suffolk, Suffolk IP 14 1Tt (GB); Lister, John, Bury St. Edmunds, IP32 7PT (GB); Stevens, Glyn, Bodorgan, LL62 5PR (GB); Atkins, Nathan, Norfolk, Norfolk NR15 2JQ (GB); Pfeil, Andy, Cambridge, CB41YZ (GB)

(56) Entgegenhaltungen:
- EP-A1- 0 594 376
- EP-A1- 1 922 912
- EP-A2- 1 600 656
- WO-A1-2017/186228

## Beschreibung

### Stand der Technik

Diese Erfindung bezieht sich auf eine Bremse für einen Motor, wie er beispielsweise in einem Rasenmäher verwendet wird. Rasenmäher arbeiten in der Weise, dass ein oder mehrere schnell umlaufende oder rotierende Blätter zum Schneiden des Pflanzenwuchses vorgesehen sind. Selbst dann, wenn die Antriebswirkung entfällt, setzt das Blatt (die Blätter) die Rotationsbewegung oder Umlaufbewegung für einige Sekunden fort. Es ist nötig, die Bewegung des Schneidblattes (der Schneidblätter) so schnell wie möglich zu stoppen, um das Verletzungsrisiko für den Benutzer des Mähers zu reduzieren.

Es sind viele Bremssysteme für Motoren vorgeschlagen worden. Eine bekannte Einrichtung ist in der EP 0 594 376 B1 beschrieben. Darin ist ein Elektromotor mit einer lüftbaren, federbeaufschlagten Bremse beschrieben, mit einer Bremsscheibe, die mit der Motorwelle undrehbar verbunden ist, jedoch axial beweglich angeordnet ist und die gegen eine Brems-Reibfläche, die fest am Gehäuse sitzt, angepresst werden kann. Dabei ist die Bremsscheibe zumindest in einer Axialrichtung mittels eines elastischen Elements verlagerbar, das in Abhängigkeit von der Zentrifugalkraft die auf das elastische Element wirkt arbeitet.

Ferner wird auf das Dokument EP 1 600 656 A2 verwiesen.

Es besteht das Bedürfnis nach einer noch wirksameren Bremseinrichtung, die beispielsweise bei Rasenmähern verwendet werden kann.

### Offenbarung der Erfindung

Die Erfindung geht aus von einer Bremse für einen Motor, mit einem elastischen Element, wobei das elastische Element mit dem Motor rotieren kann und von zumindest einer ersten Konfiguration in eine zweite Konfiguration verformbar ist, wenn die auf das elastische Element einwirkende Zentrifugalkraft von Null auf ein vorgegebenes Niveau ansteigt, wodurch die Vorspannkraft des elastischen Elements mit steigender Geschwindigkeit des Motors abnimmt, aufgrund reduzierter Vorspannkraft die Bremse gelöst wird und die Bremse dann wieder wirksam wird, wenn die auf das elastische Element wirkende Zentrifugalkraft unter das vorgegebene Niveau abfällt. Es wird vorgeschlagen, dass die Verformbarkeit des elastischen Elements in einer dritten Konfiguration durch ein insbesondere tellerförmiges Begrenzungselement begrenzt ist, wenn die auf das elastische Element wirkende Zentrifugalkraft ein weiteres vorgegebenes Niveau überschreitet. Das weitere vorgegebene Niveau ist oberhalb bzw. größer als das vorgegebenen Niveau; entspricht also einer höheren Geschwindigkeit bzw. einer höheren Umdrehungszahl des Motors. Durch das Begrenzungselement kann der Drehzahlbereich des Motors oberhalb der Deaktivierung der Bremse erweitert werden. Insbesondere kann dadurch selbst bei Motor-Steuerungsversagen und überdrehendem Motor jenseits des Drehzahlgeregelten Betriebs, eine sichere Abbremsung, sogar innerhalb eines verkürzten Zeitintervalls erfolgen. Eine mitunter schädigende Deformation des elastischen Elements wird vermieden. Eine elastische Deformation des elastischen Elements wird begrenzte.

Das elastische Element weist eine konkave Form auf. Es weist zumindest ein, Glied auf, dass sich von einer Aufnahme radial nach außen erstreckt. Bevorzugt weist das elastische Element zwei Glieder auf, die sich von einer Aufnahme, bzw. vom Zentrum oder Mittelteil des dann zweigliedrigen elastischen Elements, radial nach außen erstrecken. Bei in Ruhestellung bzw. in der ersten Konfiguration befindlichem Motor, ist eine erste Bremsfläche mittels des vorgespannten elastischen Elements in Reibungskontakt mit einer nicht rotierbaren zweiten Bremsfläche gebracht und gedrückt. Dadurch wird ein Bremsmoment erzeugt. Bei steigender Geschwindigkeit des Motors werden das bzw. die radial abstrebenden Glieder durch Zentrifugalkräfte nach außen gespreizt und dadurch die Vorspannkraft des elastischen Elements bzw. das Bremsmoment reduziert, bis schließlich die Bremse gelöst wird (Vorspannkraft entspricht null, Bremsscheibe liegt kraftlos an oder hebt ab). Bei weiter steigender Geschwindigkeit stößt schließlich das elastische Element in der dritten Konfiguration bzw. einer Spreizbegrenzungsstellung an einem mit dem elastischen Element rotierenden Begrenzungselement an; die Bremse bleibt weiterhin gelöst, aber das elastische Element wird nicht weiter gespreizt bzw. deformiert. Dadurch kann Schaden oder Überlastung am elastischen Element vermieden werden oder dieses filigraner konzeptioniert werden. Der Drehzahlbereich in dem die Bremse bzw. Bremsscheibe abhebt bzw. das Bremsmoment aufgehoben wird kann dadurch enger eingegrenzt werden.

Das elastische Element kann progressiv von seiner ersten Konfiguration in seine zweite und dritte Konfiguration verformbar sein, wenn die auf das elastische Element wirkende Zentrifugalkraft zunimmt. Alternativ kann das elastische Element sich auch abrupt verformen, wenn die Zentrifugalkraft ein vorgegebenes Niveau und/oder ein weiteres vorgegebenes Niveau erreicht, und auf seine ursprüngliche Konfiguration zurückgehen, wenn die Zentrifugalkraft unter das vorgegebene Niveau oder auf ein Niveau darunter abfällt. Durch unterschiedliche Wölbung des elastischen Elements mit Bezug auf den radialen Abstand zur Aufnahme kann mitunter eine abrupte Verformung beeinflusst werden.

Als Alternative Ausführung kann ein Kopf des Gliedes bzw. des elastischen Elements oder ein geschwungenes Ende eines Schenkels des sich radial erstreckenden Gliedes, die erste Bremsfläche sein und direkt auf die zweite Bremsfläche wirken, um die Bremswirkung zu erzielen; oder die erste Bremsfläche kann eine Bremsscheibe aufweisen oder diese bilden, die von der Welle des Motorläufers getragen ist und mit dieser rotierbar ist. Bei einer solchen Anordnung ist das elastische Element vorzugsweise auf der Welle des Läufers gehalten und drückt die Bremsscheibe gegen eine feststehende Reibfläche bzw. zweite Bremsfläche insbesondere am Körper des Motors.

Es wird ferner eine Bremse für einen Motor, mit einem elastischen Element vorgeschlagen, wobei das elastische Element eine konkave Form, eine Aufnahme zur Rotationsverbindung mit einer Motorwelle und zumindest ein insbesondere radial abstrebendes Glied, insbesondere eine Vielzahl von bevorzugt radial abstrebenden Gliedern aufweist. Ein Glied weist einen Kopf und zumindest einen den Kopf mit der Aufnahme verbindenden Stützarm auf. Das elastische Element, drückt bei in Ruhestellung befindlichem Motor, eine mit der Motorwelle rotierbare erste Bremsfläche mittels des elastischen Elements in Reibungskontakt mit einer nicht rotierenden zweiten Bremsfläche, um ein Bremsmoment zu erzeugen. Bei steigender Geschwindigkeit des Motors wird das zumindest eine Glied durch Zentrifugalkraft nach außen gespreizt und dadurch das Bremsmoment reduziert und die Bremse gelöst. Es wird vorgeschlagen, dass bei weiter steigender Geschwindigkeit des Motors bzw. bei Zunahme der Zentrifugalkraft, ein Begrenzungselement insbesondere ein tellerförmiges Begrenzungselement, die Verformung des elastischen Elements begrenzt.

Des Weiteren wird ein Elastisches Element für eine Motorbremse beansprucht, aufweisend eine gewölbte Form, eine Aufnahme zur Rotationsverbindung mit einer Motorwelle und zumindest ein Glied, insbesondere eine Vielzahl von Gliedern, besonders bevorzugt einem Gliedpaar, wobei ein Glied einen Kopf und zumindest einen den Kopf mit der Aufnahme verbindenden Stützarm aufweist. Es wird vorgeschlagen, dass der Kopf über einen weiteren Stützarm mit der Aufnahme verbunden ist, insbesondere wobei die Stützarme einen variierenden Abstand zueinander aufweisen und/oder dass zumindest ein Glied zwischen Kopf und Aufnahme eine insbesondere doppelkegelförmige Ausnehmung aufweist. Die Glieder des Gliedpaares sind spiegelsymmetrisch zueinander ausgebildet. Das elastische Element ist bei Rotation von zumindest einer ersten Konfiguration in eine zweite Konfiguration verformbar, wenn eine auf das elastische Element einwirkende Zentrifugalkraft (bei einer Rotation des elastischen Elements um insbesondere das Zentrum der Aufnahme) von Null auf ein vorgegebenes Niveau ansteigt. Durch die Vorsehung zweier Stützarme bzw. zweier Verbindungselemente zwischen Kopf und Aufnahme und/oder Mittelteil wird das elastische Element unanfälliger für Schwingungen, sprich steifer. Der bzw. die Köpfe des/der Glieder bzw. des elastischen Elements, kann dadurch stabiler gehalten werden. Eine Wärmeabfuhr kann durch eine bessere Umlüftung der Stützarme bzw. durch die Ausnehmung verbessert werden. Durch den variierenden Abstand der Stützarme zueinander, und ganz besonders durch die doppelkegelförmige bzw. sanduhrförmige Ausnehmung, kann die Spannungsverteilung im elastischen Element unter Beanspruchung (sprich Rotation bzw. angreifender Zentrifugalkräfte) verbessert werden. Die Auflage bzw. Anschlagfläche des elastischen Elements am Begrenzungselement kann dadurch optimiert werden. Einer durch das Anschlagen am Begrenzungselement beispielsweise durch Gegenbiegung verursachten nichtlinearen Spannungszunahme kann vorgebeugt werden.

Ferner wird vorgeschlagen, dass eine Breite des Kopfes die Breite des ersten und/oder zweiten Stützarms, und/oder einen Abstand zwischen den Außenflächen des ersten und zweiten Stützarms, übersteigt. Außerdem kann eine Masse des Kopfes die Masse eines Stützarms oder bevorzugt beider Stützarme übersteigen. Darüber hinaus kann die Dicke des elastischen Elements konstant sein. Durch die Breite Ausgestaltung kann der Kopf am Begrenzungselement breit beabstandet oder großflächig anschlagen was den Kopf sicher am Begrenzungselement positioniert. Durch die konstante Dicke kann ein Federblech verwendet, was einfach bearbeitet werden kann (z.B. durch Stanzen und Biegen), wobei die Elastizität erhalten bleibt und die Spannungen bei wiederkehrender Verformung bzw. langfristiger Beanspruchung in einem zulässigen Bereich bleiben. Durch die konstante Dicke des elastischen Elements und die breitere Ausgestaltung des Kopfes gegenüber den Stützarmen, kann zudem die Masse des Kopfes erhöht werden. Eine erhöhte Masse des Kopfes (im radial beabstandeten Bereich zur Aufnahme) führt zu einem erhöhten Trägheitsmoment bei Rotation um die Vorzugsdrehrichtung des elastischen Elements (also um die Aufnahmeachse). Damit kann die elastische Feder als solche leicht bauen und/oder ist für hohe Umdrehungszahlen geeignet und/oder übt eine verhältnismäßig große Vorspannkraft direkt oder indirekt auf die Bremsfläche aus, die bei zunehmender Umdrehung bzw. Geschwindigkeit des Motors verhältnismäßig rasch abnehmen. Dadurch kann ein Lösen der Bremse bei einer relativ präzise, also eng definierten Drehzahl, festgelegt werden, um einen Stillstand (Stall) des Motors, insbesondere eines Rasenmähers beim Mähen von nassem und hohem Gras, zu vermeiden und dennoch eine rasche Abbremsung zu gewährleisten.

Ferner wird vorgeschlagen, dass ein Mittelteil des elastischen Elements, insbesondere des Gliedpaars, eine im Wesentlichen hexagonale Außenkontur aufweist und/oder eben ausgebildet ist. Dadurch können beispielsweise drei Federelemente einfach symmetrisch zueinander positioniert werden, gleichzeitig wird eine gute Anlage und Kraftübertragungsfläche der elastischen Elemente zueinander gewährleistet. Dies ist vorteilhaft, da die axialen Abstände zwischen den elastischen Elementen und dem Begrenzungselementen aufgrund der seriellen (gestapelten) Anordnung der elastischen Elemente variieren und die unter Belastung (Zentrifugalkraft) wirkenden, unterschiedlich hohen Spannungen (bis zum Anschlag am Begrenzungselement) daher gut abgeführt werden können.

Es wird vorgeschlagen, dass die Aufnahme eine gekerbte Innenkontur, insbesondere eine mit mehreren Einkerbungen versehene im Wesentlichen kreisförmige Innenkontur aufweist. Dadurch kann ein ebenfalls beanspruchtes System aus elastischem Element und Begrenzungselement für eine Motorbremse zur Gewährleistung einer drehfesten Verbindung zwischen dem zumindest einen, insbesondere den drei elastischen Elementen und dem Begrenzungselement, durch plastisches Verformen einer zentrischen Aufnahme des Begrenzungselements an bzw. in die Aufnahme des zumindest einen elastischen Elements, erzeugt werden. Der Herstellprozess sieht dabei vor, das bzw. die elastischen Elemente, mit Ihrer gekerbten Aufnahme auf der zentrisch, zylindrischen Aufnahme des Begrenzungselements, zu positionieren (noch verschiebbar) und dann den Kragen der zylindrischen Aufnahme des Begrenzungselement plastisch zu verformen bzw. derart zu verbiegen, dass das bzw. die elastischen Elemente sowohl axial als auch radial rotationsfest und unverschieblich mit dem Begrenzungselement bzw. Begrenzungsteller verbunden werden. Dadurch kann die Deformation der elastischen Elemente gegenüber dem Begrenzungselement unter Einwirkung der Zentrifugalkraft in einem vorzugsweise engen Toleranzbereich festgelegt werden.

Ferner ist das Begrenzungselement ebenfalls gewölbt ausgebildet. Die Wölbungen des Begrenzungselements und des bzw. der elastischen Elemente sind zumindest teilweise einander angeglichen und/oder gleichen sich unter Belastung (Zentrifugalkrafteinwirkung) einander an. Der bzw. die Köpfe des bzw. der elastischen Elemente liegen, aufgrund ihrer in Tangentialrichtung betrachteten gerade Ausgestaltung, an zwei Punkten, insbesondere an tangential beabstandeten Punkten (Im Bereich der seitlichen Außenflächen des Kopfes) am Begrenzungselement an. Dadurch wird der Kopf unter Belastung zumindest axial stabil am Begrenzungselement lokalisiert. Eine Verdrehung des Kopfes um eine Normalachse wird vermieden. Durch eine kragenförmige (konvex-konkave) Ausgestaltung der elastischen Elemente und des Begrenzungselements werden darüber hinaus die Elemente steifer. Zudem wird eine weitere Deformation des elastischen Elements in der dritten Konfiguration vermieden. Durch die breite und konvexe Ausgestaltung des Kopfes im Bereich der zumindest indirekten Anlagefläche am Reibkissen bzw. der zweiten Reibfläche, insbesondere über die Bremsscheibe, wird eine homogene und/oder großflächige Bremsung ermöglicht. Durch den verhältnismäßig großen radialen Abstand des Kopfes, wirken zudem hohe Relativgeschwindigkeit der zwei Reibflächen zueinander, sofern sie bei drehendem Motor in Kontakt kommen. Dadurch kann punktueller Verschleiß vermieden und eine hohe Bremsleistung (in kurzer Zeitdauer) erzielt werden.

Ferner wird ein Elektor- oder Verbrennungsmotor oder eine Gartenbearbeitungsmaschine, insbesondere eine Rasenmäher mit einem vorgenannten elastischen Element und/oder einer vorgenannten Motorbremse und/oder einem vorgenannten System aus elastischem Element und Begrenzungselement beansprucht.

Ein Ausführungsbeispiel der Erfindung ist nun unter Bezugnahme auf die beigefügten Zeichnungen näher erläutert.

Es zeigen:
- Figur 1: einen Querschnitt eines Rasenmähers mit einem Elektromotors mit einer Zentrifugalbremse als Ausführungsbeispiel der Erfindung,
- Figur 2: eine vergrößerte Darstellung II der Zentrifugalkraftbremse gemäß Fig. 1,
- Figur 3: das elastische Element und das Begrenzungselement in einer ersten Ansicht,
- Figur 4: das elastische Element und das Begrenzungselement gemäß Figur 4 in einer Schnittdarstellung, und
- Figur 5: eine Einzeldarstellung des elastischen Elements in einer perspektivischen Ansicht.

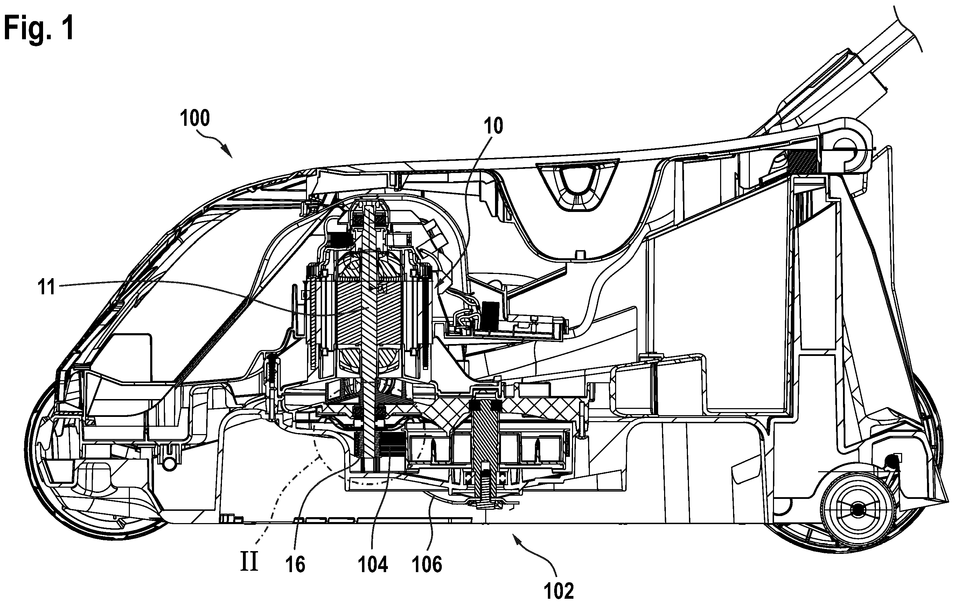

Figur 1 zeigt einen Rasenmäher 100. Der Rasenmäher 100 ist als Schieberasenmäher mit Elektromotor ausgebildet, kann aber gleichermaßen eine verbrennungsmotorisch angetriebener Rasenmäher, ein autonomer Rasenmäher oder ein Ausfsitzrasenmäher sein. Gleichermaßen ist die Erfindung auch auf andere Motoren bzw. Motoranwendungen insbesondere Gartengeräteanwendungen wie Heckenscheren oder Rasentrimmer oder dergleichen anwendbar. Der Rasenmäher 100 weist beispielhaft ein Mähwerk 102 mit einem Schneidmesser oder Messerbalken 106 auf, dass hier über einen Riementrieb 104 vom Motor 10 angetrieben wird. Der Motor 100 ist dazu vorgesehen aus Sicherheitsgründen das Schneidmesser bzw. den Messerbalken 106 schnell zum Stillstand bringen zu können. Dazu ist der Motor mit einer Bremse ausgestattet. Der Motor 10 soll selbst bei maximal möglicher Motordrehzahl (beispielsweise bei Versagen der Motoransteuerung) innerhalb von wenigen Sekunden zum Stillstand gebracht werden können.

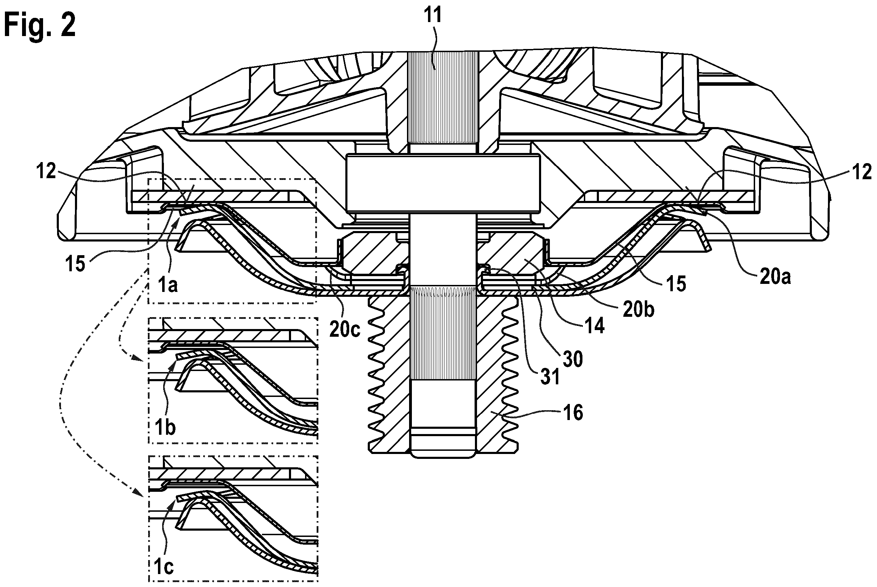

Der Motor 10 weist eine sich nach außen erstreckenden Motorwelle 11 auf. Wie aus Figur 2 besser ersichtlich ist, ist am Motorgehäuse ein ringförmiges Reibkissen 12 beziehungsweise eine zweite Bremsfläche vorgesehen, die fest mit dem statischen Motorgehäuse verbunden ist; beispielsweise klebend, haftend, durch Formschlusselemente oder in anderer Weise verbunden. Bei einer alternativen Ausführung kann das Reibkissen 12 eine Vielzahl gesonderter Reibelemente aufweisen, die am Körper bzw. Gehäuse des Motors 10 befestigt sind.

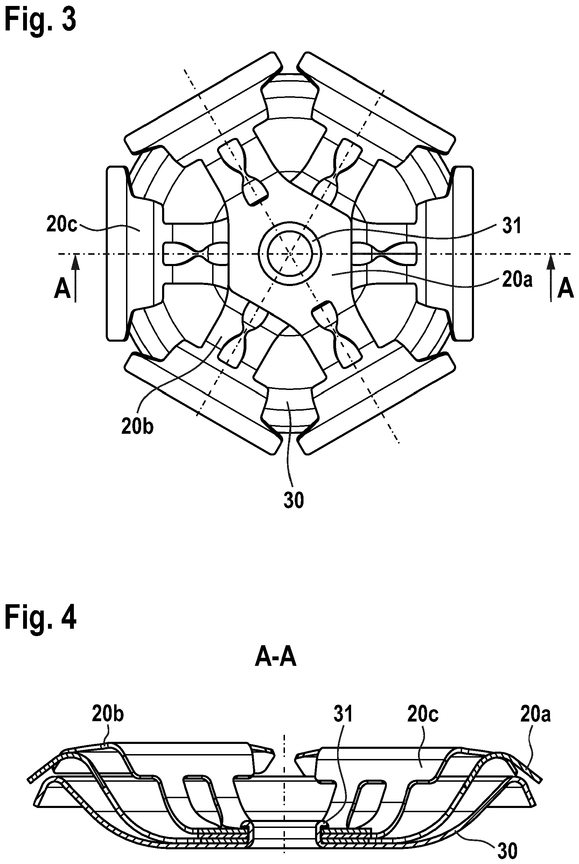

Auf der Motorwelle 11 bzw. der Welle des Läufers ist eine nicht kreisförmige Mutter 14, beispielsweise hexagonale Mutter 14 angeordnet, die mit der Motorwelle 11 rotiert. Ferner ist eine erste Bremsfläche bzw. eine Bremsscheibe 15 vorgesehen, die im Zentrum eine Öffnung enthält, die der Form der Mutter 14 entspricht. Die Bremsscheibe 15 ist so auf die Mutter 14 aufgesetzt, dass eine Rotation der Welle 11 zugleich eine Rotation der Bremsscheibe 15 bewirkt. Im vorliegenden Beispiel ist eine Axialverschiebung der Bremsscheibe 15 auf der Mutter 14 durch eine Spielpassung möglich; eine Axialverschiebung der ersten Bremsfläche bzw. der Bremsscheibe 15 ist prinzipiell aber auch durch elastische Verformung der Bremsscheibe oder dergleichen möglich. Zwischen der Mutter 14 und einem Getrieberad 16 am Ende der Motorwelle 11 sind im vorliegenden Ausführungsbeispiel drei elastische Elemente 20a, 20b, 20c bzw. Federn angeordnet. Diese sind mittels der Aufnahme 32 eines tellerförmigen Begrenzungselements 30 axial- und rotationsunverschieblich gesichert (vgl. Figur 4). Alternativ können die elastischen Elemente 20, 20a, 20b, 20c, sei es mit oder ohne Begrenzungselement 30, auch anders rotationsfest und/oder axial unverschieblich mit der Motorwelle 11 verbunden sein, beispielsweise geklammert oder dergleichen. Wenn die Motorwelle 11 rotiert, rotieren auch die elastischen Elemente 20, 20a, 20b, 20c bzw. Federn und das Begrenzungselement 30.

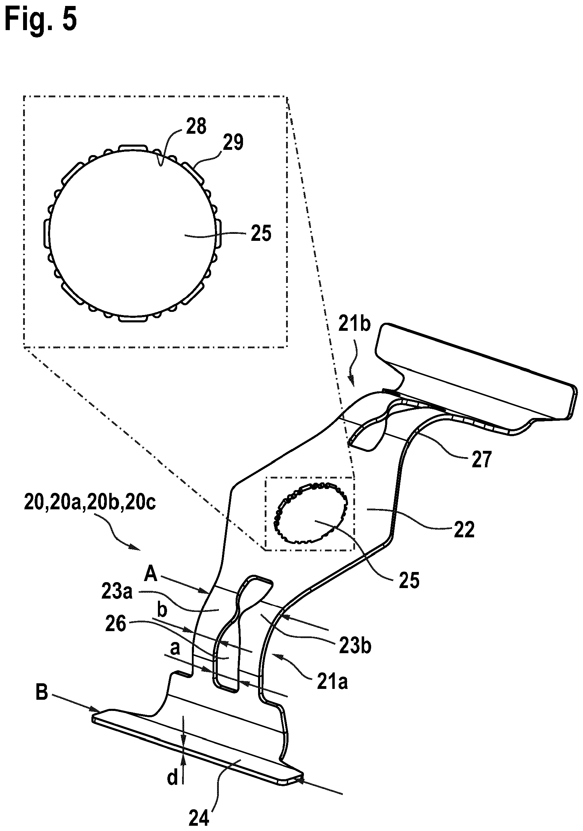

Die elastischen Elemente 20, 20a, 20b, 20c sind gewölbt. Sie weisen jeweils eine Aufnahme 25 (vgl. insbesondere Fig. 5) und zwei Glieder 21a, 21b bzw. ein Gliedpaar auf, die sich gegenüberliegend radial nach außen erstrecken. Die Glieder 21a, 21b sind spiegelsymmetrisch ausgebildet. Die Glieder 21a, 21b weisen je einen Kopf 24 und zwei Stützarme 23a, 23b auf, wobei die Stützarme 23a, 23b den Kopf 24 mit der Aufnahme 25 bzw. einem Mittelteil 22 in dem die Aufnahme 25 zentrisch angeordnet ist, verbinden. Man könnte auch sagen, die Glieder 21a, 21b sind Schenkel, die sich von einem ebenen Mittelteil 22 radial nach außen erstrecken. Der Mittelteil 22 weist eine im Wesentlichen hexagonale Außenkontur auf. Die Glieder 21a, 21b weisen eine Ausnehmung 26 auf (wodurch die zwei Stützarme 23a, 23b zueinander abgegrenzt sind). Die Köpfe 24 bilden quasi die Enden der Schenkel bzw. Glieder 21a, 21b. Jeder Stützarm 23a, 23b verläuft unter einem Winkel in Bezug auf die Ebene des Mittelteils 22 und erstreckt sich dabei in Richtung der Bremsscheibe 15. Im Bereich der Köpfe 24 findet eine Umkehrung des Winkels statt, so dass das Ende der Köpfe 24 wieder weg von der Bremsscheibe 15 weist. Zumindest in einer Ruhestellung der Bremse bzw. des Motors 10 stehen die Bremsscheibe und Köpfe 24 in Kontakt miteinander. Ein mit Bezug auf die Bremsscheibe 15 konvex gekrümmter Bereich der Glieder 21a, 21b bzw. des Kopfes 24 steht mit der Bremsscheibe 15 in Kontakt. Die Stützarme 23a, 23b sind mit Bezug auf die Bremsscheibe 15 konkav gekrümmt. Die Stützarme 23a, 23b weisen einen variierenden Abstand a zueinander auf (vgl. Fig. 5). Ferner weisen die Glieder 21a, 21b zwischen Kopf und Aufnahme eine Ausnehmung 26 auf. Die Ausnehmung 26 ist in radialer Richtung doppelkegelförmig oder sanduhrförmig. Die Breite B der Köpfe 24 ist größer als die Breite b des ersten oder zweiten Stützarms 23a, 23b und größer als ein Abstand A zwischen den Außenflächen des ersten und zweiten Stützarms 23a, 23b. Außerdem ist die Masse eines Kopfes 24 größer als die Masse beider Stützarme 23a, 23b zusammen. Die Dicke d des elastischen Elements 20 ist konstant. Ein Mittelteil 22 des elastischen Elements 20 der die zwei Glieder 21a, 21b verbindet und zentral die Aufnahme 25 aufnimmt weist eine im Wesentlichen hexagonale Außenkontur 27 auf. Die Aufnahme 25 des elastischen Elements 20 weist eine im Wesentlichen kreisförmige Innenkontur 28 mit zahlreichen Einkerbungen 29 auf. Der Kragen bzw. die Aufnahme 32 des Begrenzungselement 30 wird bei der Herstellung derart plastisch verformt, dass sich das Material des Begrenzungselements 30 in die Einkerbungen 29 drückt und rotationsfest damit verbindet, und der umgestülpte Kragen das Paket aus den drei elastischen Elementen 20a, 20b, 20c axial zusammenpresst bzw. fixiert und fest mit dem Begrenzungselement 30 verbindet.

Im Ruhezustand bzw. der Ruhestellung 1a (Fig. 2) (entspricht erster Konfiguration) drücken die Köpfe 24 der Glieder 21a, 21b des elastischen Elements 20, die Bremsscheibe 15 in Berührungskontakt mit der zweiten Bremsfläche bzw. dem Reibkissen 12, um so eine Bremswirkung zu erzielen. Wenn der Motor 10 eingeschaltet wird, rotiert der Läufer des Motors 10 bzw. die Motorwelle 11, wodurch die Mutter 14, die Bremsscheibe 15 und das elastische Element 20 ebenfalls rotieren. Der Motor 10 hat ein Drehmoment, das ausreicht, das Bremsmoment zu überwinden, welches durch den vorgespannten Kontakt zwischen der Bremsscheibe 15 und dem Reibkissen 12 erzeugt wird. Wenn die Drehzahl des Motors 10 steigt, bewirkt die auf jedes Glied 21a, 21b wirkende Zentrifugalkraft eine entsprechende Bewegung des Gliedes 21a, 21b bzw. des jeweiligen Kopfes 24 aus der Ruhestellung in eine Spreizstellung 1b (Fig. 1) (entspricht zweiter Konfiguration). Die von dem elastischen Element 20 auf die Bremsscheibe 15 ausgeübte Kraft wird folglich reduziert und führt zu einer entsprechenden Reduzierung des Bremsmomentes. Obwohl die Bremsscheibe dazu gezwungen ist, mit der Mutter 14 zu rotieren, ist sie auf dieser Mutter 14 axial verschiebbar. Somit ist die Bremsscheibe 15 dann, wenn die Glieder 21a, 21b nach außen spreizen, in der Lage, sich axial vom Reibkissen 12 wegzubewegen oder zumindest nur noch axialkraftunbeaufschlagt daran anzuliegen, wodurch die Bremse vollständig gelöst wird. Alternativ kann die Bremsscheibe 15 auch elastisch ausgebildet sein und eine zumindest geringe Rückstellkraft aufweisen um die Bremsscheibe 15 vom Reibkissen 12 abzuheben sofern die axiale Anpresskraft des elastischen Elements 20 geringer wird als die Rückstellkraft. Wird die Drehzahl des Motors 10 weiter gesteigert spreizen die Glieder 21a, 21b solange weiter nach außen, bis sie bzw. die Köpfe 24 in einer Spreizbegrenzungsstellung 1c (vgl. Fig. 2) (entspricht dritter Konfiguration) am Begrenzungselemente 30 anschlagen. Eine weitere Erhöhung der Drehzahl führt die Verformungskräfte dann auf das Begrenzungselement 30 bzw. die tellerförmige Begrenzungsscheibe ab. Eine weitere Spreizung der Glieder 21a, 21b wird dadurch zumindest reduziert, idealerweise unterbunden und dadurch einer Überlastung der elastischen Elemente 20 vorgebeugt. In den Konfigurationen 1b und 1c ist die Bremsscheibe 15 so dargestellt als würde sie weiterhin am Reibkissen 12 anliegen. Allerdings entsteht dadurch zumindest kein nennenswertes Reibmoment bzw. keine Bremskraft, da keine Anpresskraft durch das elastische Element auf die Bremsscheibe 15 bzw. auf das Reibkissen 12 wirkt. Die Bremsscheibe 15 kann sich sofern die Zentrifugalkraft die zumindest indirekt auf das Reibkissen 12 wirkende Vorspannkraft des elastischen Elements 20 aufhebt axial frei zwischen Reibkissen 12 und elastischem Element 20 insbesonderes dessen Kopf 24 bewegen.

Wenn die Stromversorgung zum Motor 10 abgeschaltet wird, wird die Drehzahl des Motorläufers sogleich durch aerodynamische und innere Reibungsverluste reduziert. Dies setzt sich sofort, bis die auf die elastischen Elemente 20 wirkende Zentrifugalkraft so ausreichend reduziert ist, dass die Glieder 21a,21b der elastischen Elemente erneut eine Kraft auf die Bremsscheibe 15 ausüben können und dadurch die Bremsscheibe wieder in Kontakt mit dem Reibkissen 12 zwingen können und dadurch ein schnelles Bremsen des Motors bewirken können.

Der Motor 10 kann insbesondere zum rotierenden oder hin und her gehenden Antrieb eines Schneidblattes (Schneidblätter) in einem Rasenmäher, einem Heckenschneider oder einem Trimmer verwendet werden. Die Motorwelle 11 kann die Schneidblätter oder den Messerbalken 106 direkt oder indirekt über beispielsweise einen Riementrieb oder eine Getriebe antreiben. Die Zentrifugalkraftbremse stellt sicher, dass die Blätter nach Abschalten des Motors schnell zum Stillstand gebracht werden.

Bei einem anderen, nicht gezeigten Ausführungsbeispiel können die Mutter 14 und die Bremsscheibe 15 weggelassen werden. Dann wirken die Glieder 21a, 21b des elastischen Elements 20 direkt auf die Reibfläche 12, um die Bremswirkung zu erzielen.

Die in der vorstehenden Beschreibung, den Ansprüchen und den Zeichnungen offenbarten Merkmale der Erfindung können sowohl einzeln als auch in beliebiger Kombination für die Verwirklichung der Erfindung in ihren verschiedenen Ausführungen herangezogen werden.

## Patentansprüche

1. Elastisches Element (20) für eine Motorbremse aufweisend eine gewölbte Form, eine Aufnahme (25) zur Rotationsverbindung mit einer Motorwelle (11) und zumindest ein Glied (21), insbesondere eine Vielzahl von Gliedern (21a, 21b), wobei ein Glied (21, 21a, 21b) einen Kopf (24) und zumindest einen den Kopf (24) mit der Aufnahme (25) verbindenden Stützarm (23, 23a) aufweist, **dadurch gekennzeichnet, dass** der Kopf (24) über einen weiteren Stützarm (23b) mit der Aufnahme (25) verbunden ist, insbesondere wobei die Stützarme (23a, 23b) einen variierenden Abstand (a) zueinander aufweisen und/oder das zumindest eine Glied (21) zwischen Kopf (24) und Aufnahme (25) eine insbesondere doppelkegelförmige Ausnehmung (26) aufweist

2. Elastisches Element (20) zumindest nach dem Oberbegriff des Anspruchs 1, **dadurch gekennzeichnet, dass** eine Breite (B) des Kopfes (24) die Breite (b) des ersten und/oder zweiten Stützarms (23a, 23b) übersteigt.

3. Elastisches Element (20) nach Anspruch 1 oder 2, **dadurch gekennzeichnet, dass** eine Masse des Kopfes (24) die Masse eines Stützarms (23a), insbesondere der zwei Stützarme (23a, 23b) übersteigt.

4. Elastisches Element (20) nach einem der vorhergehenden Ansprüche,
**dadurch gekennzeichnet, dass** eine Dicke (d) des elastischen Elements (20) konstant ist.

5. Elastisches Element (20) nach einem der vorhergehenden Ansprüche,
**dadurch gekennzeichnet, dass** ein Mittelteil (22) des elastischen Elements (20) eine im Wesentlichen hexagonale Außenkontur (27) aufweist.

6. Elastisches Element (20) nach einem der vorhergehenden Ansprüche,
**dadurch gekennzeichnet, dass** die Aufnahme (25) eine gekerbte Innenkontur (28), insbesondere eine mit mehreren Einkerbungen (29) versehene im Wesentlichen kreisförmige Innenkontur (28) aufweist.

7. Motorbremse mit einem elastischen Element (20) nach einem der vorhergehenden Ansprüche.

8. Bremse für einen Motor (10), mit einem elastischen Element (20, 20a, 20b, 20c) nach einem der vorhergehenden Ansprüche 1-6, wobei das elastische Element (20, 20a, 20b, 20c) mit dem Motor (10) rotieren kann und von zumindest einer ersten Konfiguration (1a) in eine zweite Konfiguration (1b) verformbar ist, wenn die auf das elastische Element (20) einwirkende Zentrifugalkraft von Null auf ein vorgegebenes Niveau ansteigt, wodurch die Vorspannkraft des elastischen Elements (20) mit steigender Geschwindigkeit des Motors abnimmt, aufgrund reduzierter Vorspannkraft die Bremse gelöst wird und die Bremse dann wieder wirksam wird, wenn die auf das elastische Element (20) wirkende Zentrifugalkraft unter das vorgegebene Niveau abfällt, **dadurch gekennzeichnet, dass** die Verformbarkeit des elastischen Elements in einer dritten Konfiguration (1c) durch ein radial gewölbtes insbesondere tellerförmiges Begrenzungselement (30) begrenzt ist, wenn die auf das elastische Element (20) wirkende Zentrifugalkraft ein weiteres vorgegebenes Niveau überschreitet.

9. System aus elastischem Element (20, 20a, 20b, 20c) nach Anspruch 1-6, und einem radial gewölbten Begrenzungselement (30) für eine Motorbremse, **dadurch gekennzeichnet, dass** eine drehfeste Verbindung zwischen dem zumindest einen elastischen Elemente (20, 20a, 20b, 20c) und dem Begrenzungselement (30), durch plastisches Verformen einer zentrischen Aufnahme (32) des Begrenzungselements (30) an bzw. in die Aufnahme (25) des zumindest einen elastischen Elements (20, 20a, 20b, 20c) erzeugt ist.

10. Gartenbearbeitungsmaschine, insbesondere Rasenmäher, mit einem elastischen Element nach Anspruch 1-6 und/oder mit einer Motorbremse nach Anspruch 7-8 und/oder mit einem System nach Anspruch 9.

## Claims

1. Elastic element (20) for a motor brake, having a curved shape, a receptacle (25) for rotational connection to a motor shaft (11) and at least one member (21), in particular a multiplicity of members (21a, 21b), wherein a member (21, 21a, 21b) has a head (24) and at least one supporting arm (23, 23a) which connects the head (24) to the receptacle (25), **characterized in that** the head (24) is connected to the receptacle (25) by way of a further supporting arm (23b), in particular wherein the supporting arms (23a, 23b) have a varying distance (a) from one another and/or the at least one member (21) has an in particular double-cone-shaped cutout (26) between the head (24) and the receptacle (25).

2. Elastic element (20) at least according to the preamble of Claim 1, **characterized in that** a width (B) of the head (24) exceeds the width (b) of the first and/or second supporting arms (23a, 23b).

3. Elastic element (20) according to Claim 1 or 2, **characterized in that** a mass of the head (24) exceeds the mass of a supporting arm (23a), in particular of the two supporting arms (23a, 23b).

4. Elastic element (20) according to one of the preceding claims, **characterized in that** a thickness (d) of the elastic element (20) is constant.

5. Elastic element (20) according to one of the preceding claims, **characterized in that** a middle part (22) of the elastic element (20) has a substantially hexagonal outer contour (27).

6. Elastic element (20) according to one of the preceding claims, **characterized in that** the receptacle (25) has a notched inner contour (28), in particular a substantially circular inner contour (28) which is provided with a plurality of notches (29) .

7. Motor brake having an elastic element (20) according to one of the preceding claims.

8. Brake for a motor (10), having an elastic element (20, 20a, 20b, 20c) according to one of the preceding Claims 1-6, wherein the elastic element (20, 20a, 20b, 20c) can rotate with the motor (10) and can be deformed from at least a first configuration (1a) into a second configuration (1b) if the centrifugal force acting on the elastic element (20) increases from zero to a predefined level, as a result of which the preload force of the elastic element (20) decreases with increasing speed of the motor, the brake is released on account of the reduced preload force and the brake becomes effective again if the centrifugal force acting on the elastic element (20) falls below the predefined level, **characterized in that** the deformability of the elastic element in a third configuration (1c) is delimited by a radially curved, in particular disc-shaped delimiting element (30) if the centrifugal force acting on the elastic element (20) exceeds a further predefined level.

9. System composed of an elastic element (20, 20a, 20b, 20c) according to Claim 1-6 and a radially curved delimiting element (30) for a motor brake, **characterized in that** plastic deformation of a central receptacle (32) of the delimiting element (30) onto or into the receptacle (25) of the at least one elastic element (20, 20a, 20b, 20c) produces a rotationally fixed connection between the at least one elastic element (20, 20a, 20b, 20c) and the delimiting element (30).

10. Gardening machine, in particular lawnmower, having an elastic element according to Claim 1-6 and/or having a motor brake according to Claim 7-8 and/or having a system according to Claim 9.

## Revendications

1. Elément élastique (20) destiné à un frein moteur, présentant une forme courbe, un logement (25) pour une liaison en rotation avec un arbre moteur (11) et au moins une pièce (21), en particulier une pluralité de pièces (21a, 21b), dans lequel une pièce (21, 21a, 21b) présente une tête (24) et au moins un bras de support (23, 23a) reliant la tête (24) au logement (25),
**caractérisé en ce que** la tête (24) est reliée au logement (25) par l'intermédiaire d'un autre bras de support (23b), les bras de support (23a, 23b) présentant en particulier une distance variable (a) l'un par rapport à l'autre, et/ou ladite au moins une pièce (21) présentant entre la tête (24) et le logement (25) un évidement (26), en particulier en forme de double cône.

2. Elément élastique (20) au moins selon le préambule de la revendication 1, **caractérisé en ce qu'**une largeur (B) de la tête (24) dépasse la largeur (b) du premier et/ou du deuxième bras de support (23a, 23b).

3. Elément élastique (20) selon la revendication 1 ou 2, **caractérisé en ce qu'**une masse de la tête (24) dépasse la masse d'un bras de support (23a), en particulier des deux bras de support (23a, 23b).

4. Elément élastique (20) selon l'une quelconque des revendications précédentes, **caractérisé en ce qu'**une épaisseur (d) de l'élément élastique (20) est constante.

5. Elément élastique (20) selon l'une quelconque des revendications précédentes, **caractérisé en ce qu'**une parte centrale (22) de l'élément élastique (20) présente un contour extérieur (27) substantiellement hexagonal.

6. Elément élastique (20) selon l'une quelconque des revendications précédentes, **caractérisé en ce que** le logement (25) présente un contour intérieur rainuré (28), en particulier un contour intérieur (28) substantiellement circulaire muni de plusieurs rainures (29) .

7. Frein moteur comprenant un élément élastique (20) selon l'une quelconque des revendications précédentes.

8. Frein destiné à un moteur (10), comprenant un élément élastique (20, 20a, 20b, 20c) selon l'une quelconque des revendications précédentes 1 à 6, l'élément élastique (20, 20a, 20b, 20c) pouvant tourner avec le moteur (10) et pouvant être déformé d'au moins une première configuration (la) en une deuxième configuration (1b) si la force centrifuge agissant sur l'élément élastique (20) augmente de zéro à un niveau prédéfini, de sorte que la force de précontrainte de l'élément élastique (20) diminue lorsque la vitesse du moteur augmente, le frein est desserré en raison d'une force de précontrainte réduite, et le frein redevient ensuite actif si la force centrifuge agissant sur l'élément élastique (20) descend sous le niveau prédéfini,
**caractérisé en ce que** la possibilité d'une déformation de l'élément élastique en une troisième configuration (1c) est limitée par un élément de limitation (30) courbé radialement, en particulier en forme de disque, si la force centrifuge agissant sur l'élément élastique (20) dépasse un autre niveau prédéfini.

9. Système composé d'un élément élastique (20, 20a, 20b, 20c) selon les revendications 1 à 6, et d'un élément de limitation (30) courbé radialement pour un frein moteur,
**caractérisé en ce qu'**une liaison verrouillée en rotation est créée entre ledit au moins un élément élastique (20, 20a, 20b, 20c) et l'élément de limitation (30) par une déformation plastique d'un logement central (32) de l'élément de limitation (30) sur ou dans le logement (25) de l'au moins un élément élastique (20, 20a, 20b, 20c).

10. Machine de jardinage, en particulier une tondeuse, comprenant un élément élastique selon les revendications 1 à 6 et/ou comprenant un frein moteur selon les revendications 7 et 8 et/ou comprenant un système selon la revendication 9.
